# EUROPEAN PATENT APPLICATION

(11) **EP 4 808 087 A1**
(43) Date of publication of application: **16.09.2026**
(21) Application number: 25305331.8
(22) Date of filing: 13.03.2025
(51) Int. Cl.: H04L 67/12, H04B 7/15, H04L 47/10, H04W 4/40

(54) **JOINT PROCESSING FOR DATA TRANSPORTATION IN A MULTI-AGENT SYSTEM**

(71) Applicant: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: SIBEL, Jean-Christophe, 35708 RENNES CEDEX 7 (FR); BECHIHI, Adel, 35708 RENNES CÉDEX 7 (FR)
(74) Representative: Plasseraud IP

(57) **Abstract**

Method (500) for jointly transporting a plurality of data flows via a system (2) having a limited capacity, the plurality of data flows being respectively associated to sets of requirements,
the method comprising the following steps:
- (S510) obtaining information related to the limited capacity and to the sets of requirements,
- based on said plurality of data flows, on the information related to the limited capacity and the sets of requirements, (S540) selecting at least one aggregation mode for aggregating at least a part of the plurality of data flows, among a plurality of predefined aggregation modes,
- (S550) applying said selected aggregation mode to said part of the plurality of data flows to determine an aggregated data flow,
- (S560) encoding the aggregated data flow using an encoding function,
- (S570) transporting the encoded aggregated data flow via the system (2).

## Description

### Technical Field

The present disclosure pertains to the field of wireless communications and more particularly to data aggregation for joint encoding and transportation of a plurality of data flows in a multi-agent system.

### Background Art

Multi-agent communication systems operate applications involving the encoding and transportation of a plurality of data flows from respective devices (i.e., agents) via a network system. Such data flows are eventually received (or retrieved) and decoded at a user end (e.g., via an end-user device) accessing the application.

For example, the deployment of a fleet of Unmanned Aerial Vehicles (UAV) such as drones over a geographical zone for video monitoring may correspond to a multi-agent communication system. Indeed, the plurality of drones creates or generates respective video flows representing observations of different (intersecting or not) portions of the geographical zone and may transmit such video flows using a communication network (e.g., a 5G communication network) via respective communication channels to an end-user device, such as a teleoperator device for a remote monitoring of the geographical zone. Such video flows may be encoded and transmitted using radio resources allocated to the respective drones by a base station (e.g., a gNB) of the communication network.

In another example, the storage of data bitstreams collected by a plurality of source devices in a storage system (e.g., a data center) may correspond to a multi-agent communication system. Indeed, the plurality of source devices stores the bitstreams in one or several storage disks, using storage resources, of the data center from the storage network system. Such bitstreams are stored in an encoded form in the data center for retrieval by an end-user device of a teleoperator connecting to the data center.

In particular, the network system serving such multi-agent systems has a limited capacity (e.g., measured in available number of resources), so that the quantity and/or the availability timing of resources for transporting the encoded data flows for access by end-user devices is limited and constrained. This limited capacity of the network system is all the more challenging for multi-agent system data transportation as the network system may also serve other services, applications and users than the multi-agent system, which further impacts the actual available resources for multiple data flow transportation.

Yet, the transportation of data flows in the context of multi-agent systems is often associated with specific requirements to be satisfied for each data flow, for example related to Quality of Service (QoS) requirements of the operated application. Typically, the plurality of video flows to be transmitted requires a minimum rendering quality of each video for each drone, so that the overall geographical remote monitoring may be operated. Similarly, the stored bitstreams should be encoded using a compression factor enabling a minimum rendered quality at data retrieval.

Furthermore, most applications served by such multi-agent systems have requirements related to a maximum tolerated latency for receiving the plurality of data flows and/or a maximum tolerated latency between the reception of successive data flows for example.

Depending on the configuration of the multi-agent system and the operated application, the connectivity of the plurality of agents to the network system may also vary, resulting in temporary or punctual connection losses between part of the multi-agent system and the network system (e.g., lost communication between a device and the base station), leading to timing issues in transmitting the data flows.

Thus, the transportation of a plurality of individual data flows originating from a plurality of distinct source devices while satisfying quality and latency requirements is a challenge in the context of a network system having limited capabilities, leading to low communication data rates, bandwidth saturation, storage saturation and/or channel overflow for example. This may then result in packet error, packet drop, delay and/or jittering issues when transporting the plurality of data flows from the multi-agent system, which impacts the operated application.

### Summary

This disclosure improves the situation by proposing methods and systems for transporting a plurality of data flows in the context of a multi-agent system while satisfying their respective requirements, in a network system having limited capabilities.

In a first aspect, it is proposed a method for jointly transporting a plurality of data flows via a system having a limited capacity, the plurality of data flows being respectively associated to sets of requirements,
the method comprising the following steps:
- obtaining information related to the limited capacity and to the sets of requirements,
- based on data related to said plurality of data flows, on the information related to the limited capacity and the sets of requirements, selecting at least one aggregation mode for aggregating at least a part of the plurality of data flows, among a plurality of predefined aggregation modes,
- applying said selected aggregation mode to said part of the plurality of data flows to determine an aggregated data flow,
- encoding the aggregated data flow using an encoding function,
- transporting the encoded aggregated data flow via the system.

The proposed method addresses the aforementioned drawbacks of prior art, by processing the plurality of data flows to be transported so as to optimize the payload gain of such transportation and thus reducing the use/occupancy of the limited capacity of the system when transporting such data flows, while fulfilling the requirements associated to each data flow.

The proposed method thus enables to transport the content of a plurality of data flows, e.g., in a multi-agent system context, which potentially require a considerable amount of resources and capacity, and which would be limited or compromised by the limited capacity of the system used for transporting such plurality of data flows, typically a network system having limited radio resources to be allocated for data flow transmission or a data storage having a limited storage capacity. Such issue is all the more challenging to address as recent network or storage systems tend to support and serve a plurality of applications, services, data operations and devices having different and/or demanding requirements, e.g., in Quality of Service or Quality of Experience, while having a delimited capacity to offer.

The proposed method thus avoids having to compromise on the requirements associated to the transportation of the plurality of data flows due to limits imposed by the limited capacity of the system. In other words, the proposed method notably enables to avoid situations of data packet rerouting, drops, delays due to system constraints. The proposed method also enables to reduce the occupancy of resources of the system, thus reducing the congestion and saturation of the system and improving the reliability and performance of the system.

In order to optimize the payload gain when transporting the content of the plurality of data flows, the method proposes to prepare and process the data flows in a specific manner, by identifying relevant aggregations of the data flows or parts of them, so as to take advantage of potential redundancies naturally contained in the data flows and resulting in a reduced payload at the encoding stage, with respect to a straightforward encoding of the plurality of data flows in a separate way. Such aggregation may notably be performed by introducing joint devices configured to perform such aggregation while offering the possibility to involve the different devices emitting the data flows in some steps leading to the aggregation and transportation of data, in the perspective of computation complexity reduction and signaling optimization.

By a data flow, it is understood a signal, a message, a succession of data packets which is acquired, obtained or emitted by a device and to be transported via a system, with a finality of reaching an end-user device to provide such end-user device with the content of the data flow, while respecting some constraints (or requirements), e.g., of time or of quality of restitution of such content. Such data flow could for example be composed of frames, bits, pixels, voxels etc., and could for example be a video flow, an image flow, a point cloud, a bitstream. By a plurality of data flows, it is understood separate data flows acquired by different devices, which contents are aimed to be transported to a same end-user device.

By sets of requirements associated to the data flows, it is understood an ensemble of requirements or constraints to be expected on the end-user side of the data flows. Such requirements could for example be set by the end-user in the context of the service in which data flows are transported. Such requirements could notably be appreciated and measured on the end-user side. For example, such sets of requirements could involve a rendered quality of the received data flows, a timing to be expected when receiving one, all data flows or between data flows. Such sets of requirements could be defined in the overall context of a quality of service involving the transportation of the data flows or in the overall context of a quality of experience of the end-user.

By a system having a limited capacity, it is understood a system which allocates a limited number of resources (e.g., quantified as slots blocks, subcarriers, units etc.) to transport the plurality of data flows. Such system could for example be a communication network system with limited radio resources, or a data storage system having a limited storage capacity. Such limited capacity could be a physical limitation of the system or a preconfigured limitation, for example due to preconfigured capacity allocation to a given application or service.

By transporting a plurality of data flows, it is understood using resources of the system to transport the content of the plurality of data flows from an emission end (or a source end) to an end-user side (or a reception end). For example, in the context of a communication network system, the transportation of the data flows is understood as transmitting the data flows. In another example, in the context of a data storage system, the transportation of data flows is understood as storing the data flows in view of data retrieval. By a joint transportation of such plurality of data flows, it is understood transporting the same content of the plurality of data flows yet in a modified data structure, e.g., by reorganizing, restructuring or modifying elements of the data flows, while keeping a sufficient rendering quality when restituting the data flows on the reception end.

By obtaining information related to the limited capacity and to the sets of requirements, it is understood receiving, calculating, predicting or estimating information to quantify the limited capacity and the requirements. Such information are notably comparable, for example so as to assess whether the limited capacity of the system enables the transportation of the data flows according to their respective set of requirements (i.e., by fulfilling such requirements).

By selecting at least one aggregation mode, it is understood identifying a process for reorganizing, restructuring, regrouping, modifying, merging, pruning, and/or interleaving the data flows, parts of the data flows or elements of the data flows, so as to minimize the payload size occupied by the resulting aggregated data flow(s) for encoding. Such selection of an aggregation mode thus also implies the selection of adequate parts of the data flows to be processed so as to form one or several aggregated data flows.

By applying the selected aggregation mode, it is understood actually processing the data flows according to the process identified via the aggregation mode, so as to determine one or several aggregated data flows.

In a second aspect, it is proposed a data transmission method for jointly transporting or transmitting a plurality of data flows from a plurality of respective source devices to an end-user device via a communication network system having a limited capacity, the plurality of data flows being respectively associated to sets of requirements, said communication method being performed according to the proposed method.

As a consequence, the proposed method may be applied as a data transmission method for jointly transmitting the plurality of data flows in an aggregated form via the system.

In a third aspect, it is proposed a storage method for jointly transporting or storing a plurality of data flows from a plurality of respective source devices to an end-user device for retrieval, via a data storage system having a limited capacity, said storage method being performed according to the proposed method.

As a consequence, the proposed method may also be applied as a data storage method for jointly storing the plurality of data flows in an aggregated form via the system.

The following features may also be implemented, possibly in combination with each other, as possible embodiments of the proposed methods:

In an embodiment, the encoded aggregated data flow has a payload size lower than a sum of payload sizes of the plurality of data flows after encoding using the encoding function.

In an embodiment, the limited capacity is at least one among:
- a limited number of resources,
- a limited set of frequencies,
- a limited set of time slots,
- a limited set of channels, and
- a limited storage capacity.

In an embodiment, applying the selected aggregation mode to the plurality of data flows includes:
- calculating a similarity parameter associated to the part of plurality of data flows,
- based on said similarity parameter, performing at least one among:
   -- interleaving elements composing the plurality of data flows,
   -- grouping elements composing the plurality of data flows, and
   -- pruning elements composing the plurality of data flows.

As a consequence, by calculating such similarity parameter, the method proposes to identify a correlation or similarity information between different elements, parts, portions of the data flows, which reflects a redundancy to be exploited in the data flows. Such similarity parameter may be understood as any value, parameter, function, metrics reflecting and quantifying such correlation between data flows or parts of them.

In an embodiment, the proposed method further comprises, before the selection step:
- performing a feature extraction operation for at least some of the plurality of data flows, a size of the extracted features for each data flow being strictly inferior to a size of the corresponding data flow,
and the selection of the at least one aggregation mode is based on a similarity parameter calculated based on said extracted features.

As a consequence, instead of quantifying the correlation between data flows by directly using and processing the data flows, it is proposed to rely on extracted features accurately representing the data flows. Such aspect thus advantageously enables to reduce the computation complexity of the proposed method, notably when the number and/or the size of the data flows is considerable.

In an embodiment, the selection of the at least one aggregation mode is performed using a trained neural network unit.

In an embodiment, the selection of the at least one aggregation mode further includes a selection training step, said selection training step further comprising the following steps:
- obtaining a training set of data flows associated to a training set of requirements,
- obtaining predefined sets of encoding options associated to predefined encoding functions,
- extracting features associated to candidate data flows among the training set of data flows,
- based on the extracted features, selecting at least one candidate aggregation mode among the plurality of predefined aggregation modes,
- applying said at least one candidate aggregation mode to the training set of data flows to determine a candidate aggregated data flow,
- depending on the candidate data flows, selecting a candidate encoding function and a candidate set of encoding options,
- encoding the candidate aggregated data flow using the selected candidate encoding function and the selected candidate set of encoding options,
- based on a comparison between the candidate data flows and the candidate aggregated data flow, determining a value of a cost function associated to a candidate configuration formed by the following parameters: the candidate data flows, the extracted features, the candidate aggregation mode, the selected candidate encoding function and the selected candidate set of encoding options,
- optimizing the cost function by varying the candidate configuration.

In an embodiment, the selection training step further including obtaining a training limited capacity, and wherein the cost function is optimized by:
- maximizing a payload size gap between the candidate data flows and the candidate aggregated data flow, and
- fulfilling the requirements associated to the candidate data flows.

As a consequence, the training of the model to be used for selecting the aggregation mode(s) enables to integrate the conditions to be fulfilled when aggregating the data flows: maximizing the payload gain of aggregating the data flows (with respect to not aggregating them and keeping them in their original separate form) while still fulfilling the requirements for transmitting the data flows.

In an embodiment, the selection of the at least one aggregation mode is triggered by at least one element among:
- a result of a comparison between the information related to the limited capacity and data related to a payload size of the plurality of data flows,
- data related to an availability of at least one source device associated with a data flow.

As a consequence, the proposed method may be performed by triggering the aggregation process when the situation of the system and/or of the devices is adequate or requires the payload gain enabled by such aggregation. For example, when it is estimated that the limited capacity of the system will be inferior to an expected payload size of the data flows, the proposed process may be triggered so as to enable the transportation of the data flows. In another example, when a device presents connectivity issues with the system and cannot directly perform encoding and transportation of their data flow, the process may be triggered so as to have another device taking charge of its data flow transportation.

In an embodiment, the transported encoded joint data flow is received, decoded and de-aggregated by an end-user device based on the at least one selected aggregation mode, resulting in a plurality of decoded data flows, and the set of requirements is related to at least one among :
- a rendering quality of each decoded data flow,
- a latency tolerance for receiving the transported encoded joint data flow,
- a similarity level between the plurality of data flows and the plurality of decoded data flows.

As a consequence, the proposed method has an overall goal of enabling a satisfying restitution of information contained in the data flows on the end-user side. Such conditions set on the end-user side are notably taken into account in the proposed method.

In an embodiment, the encoding function is at least one among:
- a non-linear encoding function,
- a JPEG encoder,
- a H264/5/6 encoder,
- a point-cloud octree encoder,
- a source coding, preferably a Huffman coding or a CABAC coding.

In particular, the non-linear nature of the encoding function enables to effectively perform a payload gain when encoding an aggregated form of several data flows. Typically, a non-linear encoding function enables to obtain a payload size of an encoded aggregated data flow different (and thus potentially lower) than the sum of the payload sizes of the data flows separately encoded. There is thus an advantage in using a non-linear encoding function when data flows are specifically aggregated.

In an embodiment, the aggregated data flow is encoded according to predefined parameters among:
- quality factor,
- resolution,
- video bitrate,
- video framerate,
- size of a group of pictures,
- voxel size,
- octree depth,
- compression factor,
- computation complexity.

In an embodiment, the system is one among:
- a 5G communication system,
- a Wi-Fi communication system,
- a Bluetooth communication system,
- an Ethernet communication system,
- an HDD storage system,
- an SSD storage system
- a Network Attached Storage - NAS - System.

In an embodiment, the data flows are among:
- videos,
- images,
- point clouds,
- bitstreams,
- LIDAR measurements.

In an embodiment, the proposed method is performed by at least a joint device connected to the system, the joint device being one among:
- a source device associated to at least one data flow among the plurality of data flows,
- an orchestration device.

In another embodiment, the proposed method may also be performed by one or several joint devices and one or several source devices.

In another aspect, it is proposed a device for determining at least one encoded aggregated data flow based on a plurality of data flows emitted by a plurality of respective source devices for transportation of said encoded aggregated data flow via a system, the joint device comprising at least one processing unit for performing the method according to any one of the preceding claims.

In another aspect, it is proposed a computer software comprising instructions to implement at least a part of the method as proposed when the software is executed by a processing unit.

In another aspect, it is proposed a computer-readable non-transient recording medium on which a software is registered to implement the method as proposed when the software is executed by a processing unit.

### Brief Description of Drawings

Other features, details and advantages will be shown in the following detailed description and on the figures, on which:
Fig. 1

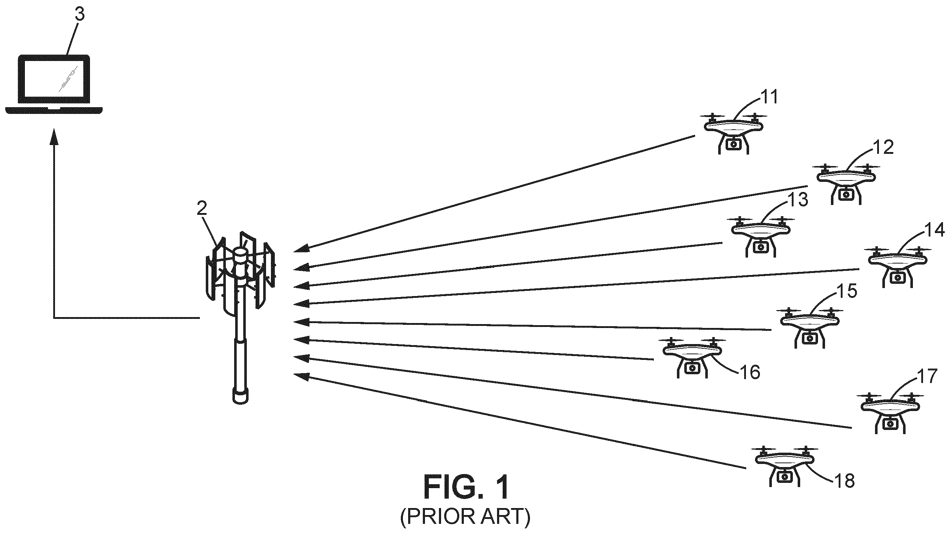

   [Fig. 1] schematizes a multi-agent system according to prior art.
Fig. 2

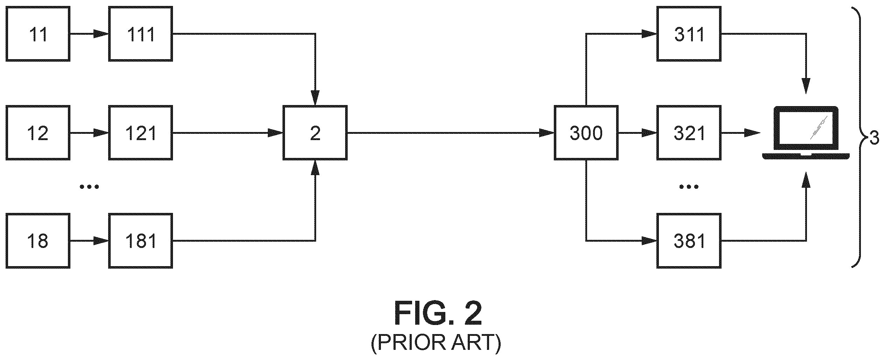

   [Fig. 2] schematizes an architecture for transporting a plurality of data flows in a multi-agent system according to prior art.
Fig. 3

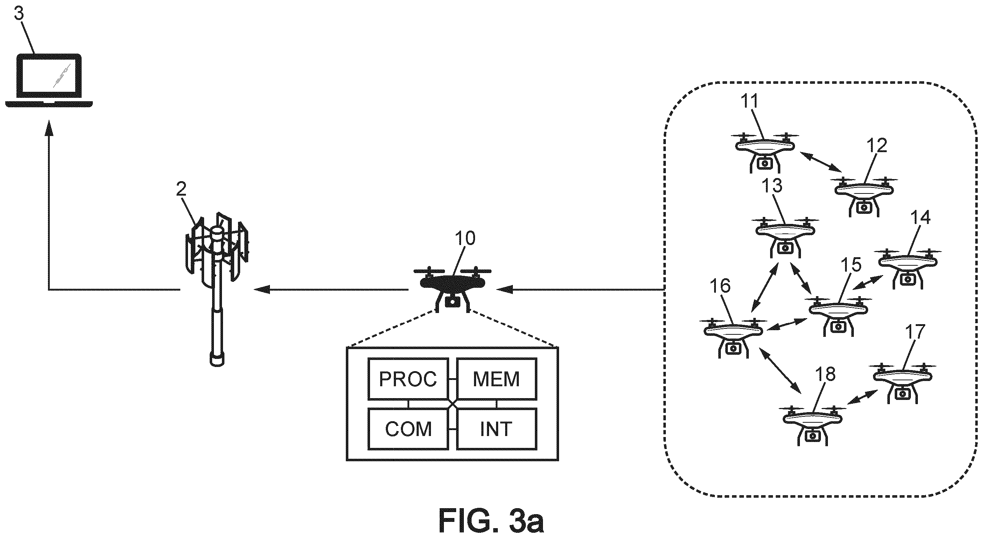

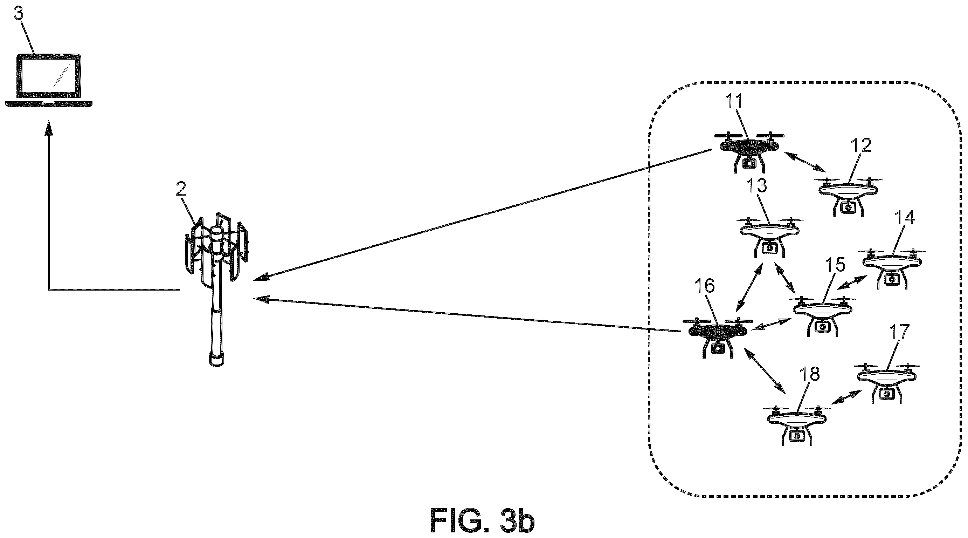

   [Fig. 3a], [Fig. 3b] schematize multi-agent systems according to possible embodiments.
Fig. 4

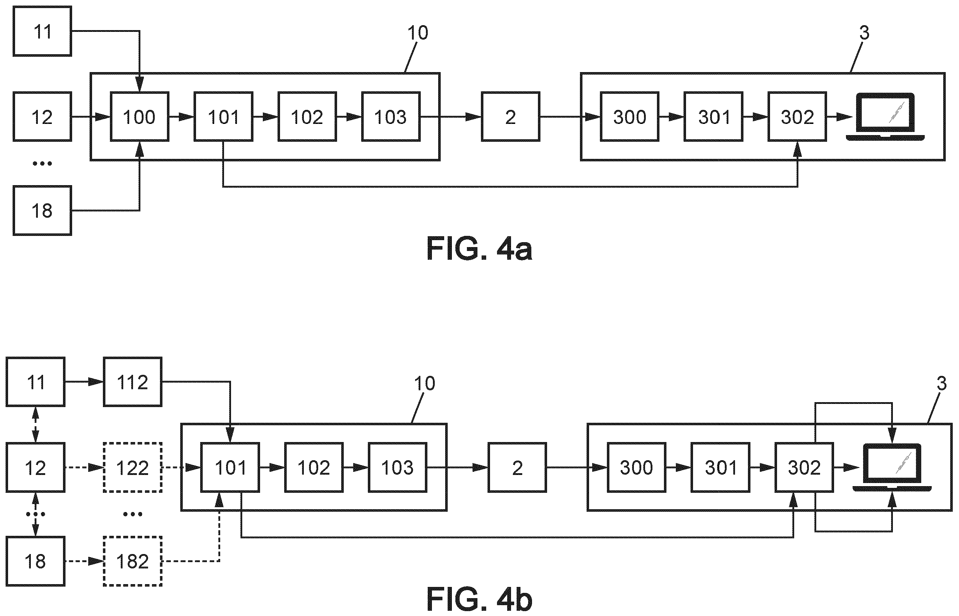

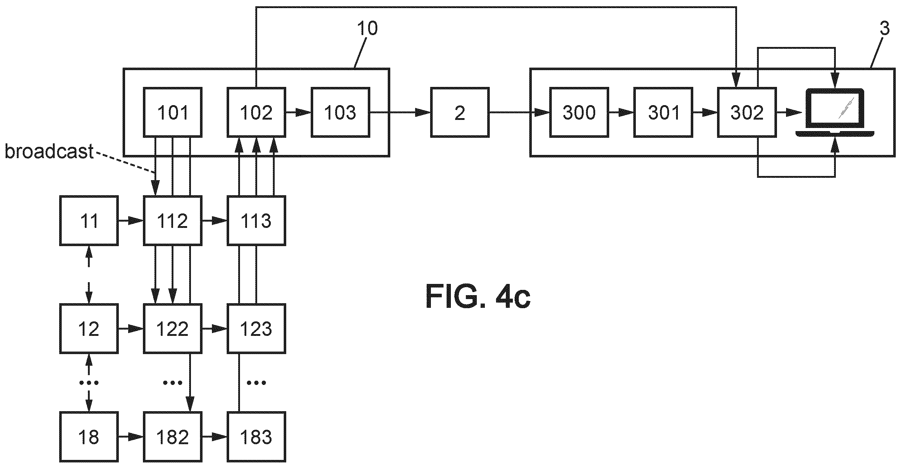

   [Fig. 4a], [Fig. 4b], [Fig. 4c] schematizes architectures for transporting a plurality of data flows in a multi-agent system according to possible embodiments.
Fig. 5

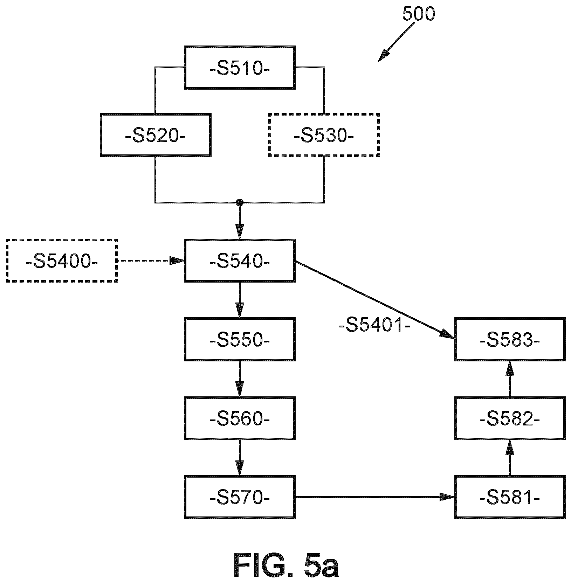

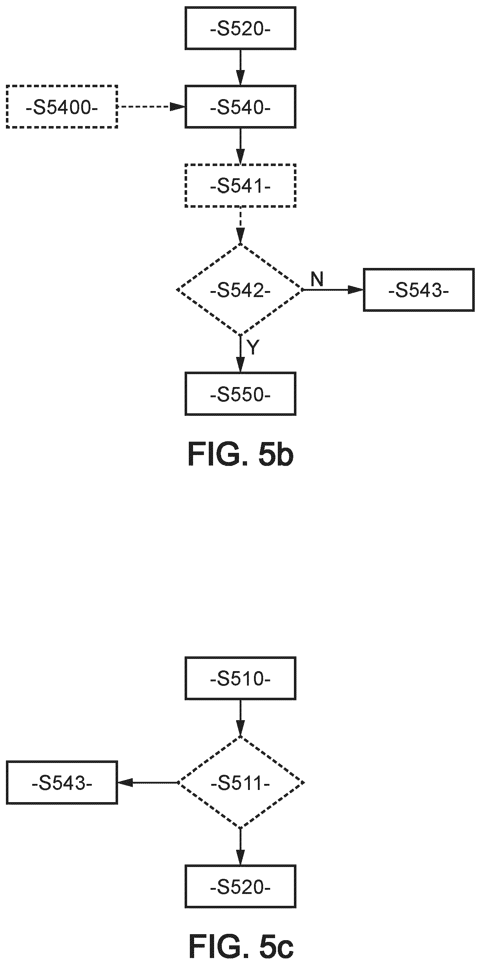

   [Fig. 5a], [Fig. 5b], [Fig. 5c] are flowcharts illustrating embodiments of a method for jointly transporting multiple data flows in a multi-agent system.
Fig. 6

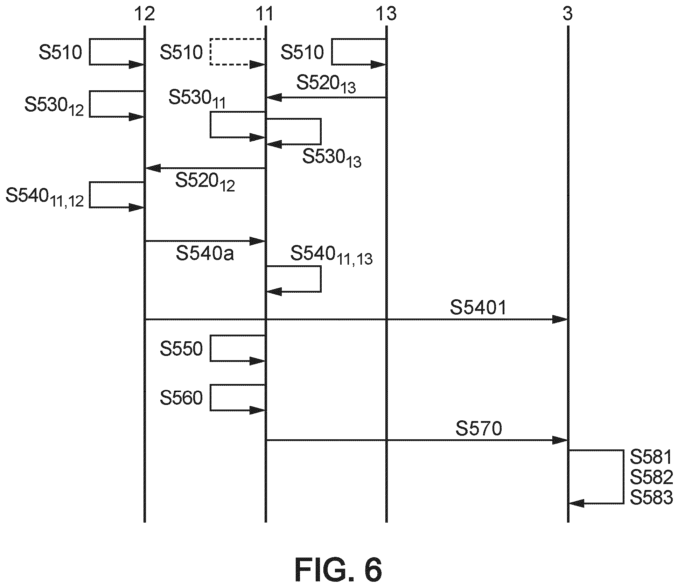

   [Fig. 6] schematizes the method for jointly transporting multiple data flows according to an embodiment.
Fig. 7

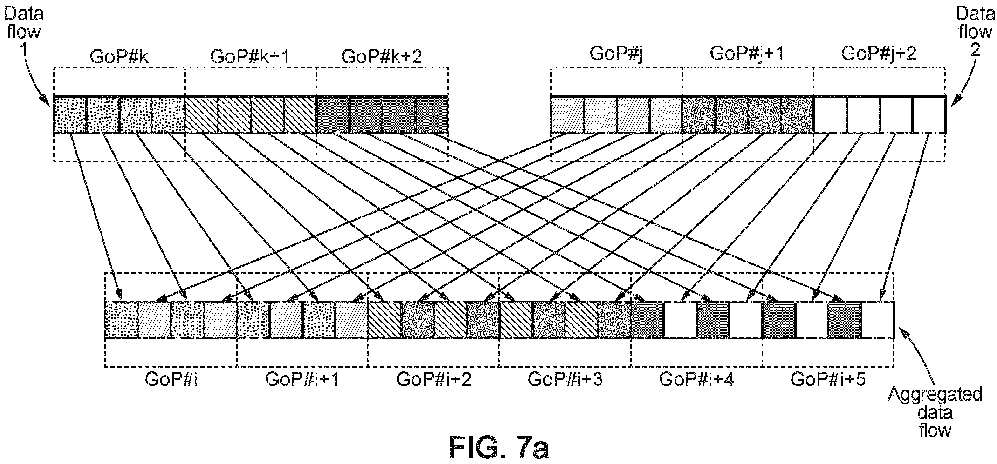

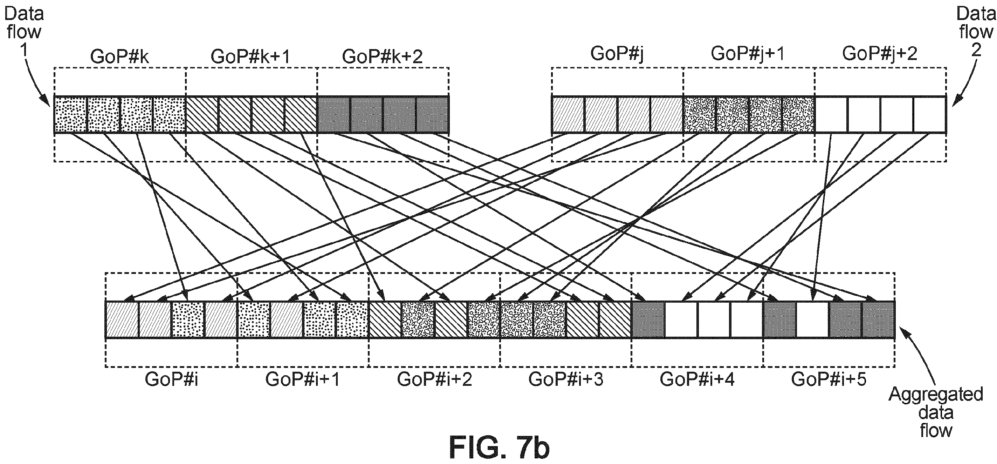

   [Fig. 7a], [Fig. 7b] illustrate examples of data flow aggregation according to possible embodiments.

### Description of Embodiments

It is referred to figure 1. Figure 1 schematizes an example of a system, including a multi-agent system according to prior art. The system may include at least a plurality of devices 11-18 forming the multi-agent system, a transportation entity - such as a base station 2 - and an end-user device 3.

The system corresponds to a data transportation system configured to transport data flows emitted by the devices 11-18 of the multi-agent system to the end-user device. The devices 11-18 may also be referred to as source devices, as they emit data flows to be transmitted. The data flows may for example be videos, images, point clouds, bitstreams, LIDAR measurements.

In an example, such system may be a data transmission or streaming system, as illustrated on figure 1. Typically, the system may for example be a terrestrial or non-terrestrial communication network, e.g., a Fifth Generation New Radio - 5G NR - communication network, configured to support data transmission involving devices 11-18 of the multi-agent system. The system may also be a Wi-Fi communication system, a Bluetooth communication system, an Ethernet communication system for instance.

In such example, the transportation entity 2 is configured to support the data transmission from the devices 11-18 of the multi-agent system to the end-user device 3, for example by allocating radio resources to enable signaling and transmission from the devices 11-18 to the end-user 3. Such transportation entity 2 may for example be a base station 2, e.g., a gNB.

In such example, the devices 11-18 may be user equipment, terminals, aircraft, drones, more generally Unmanned Aerial Vehicles or terrestrial equipment connected to the communication network and configured to transmit data flows, signals or messages to at least the end-user device 3 via the communication network.

In such example, the end-user device 3 may be a teleoperator device, such as a laptop, a user equipment, a terminal connected to the communication network and configured to receive data related to the transmitted data flows emitted by the devices 11-18 via the network. Such end-user device 3 may for example receive such data in the context of an application supported by the communication network, such as a remote monitoring of a geographical area where the devices 11-18 are deployed and/or acquire data flows.

In another example, not represented on the figures, the system may be a data storage system. Typically, the system may for example be a data center comprising one or several storage disks and may be network-based or not. For example, the system may be an HDD storage system, an SSD storage system, a Network-based Access Storage, NAS, system. The system may then be configured to receive a plurality of data flows (e.g., via bitstreams) from the devices 11-18 for encoding and storage in the storage system and for further retrieval by the end-user device 3.

In such example, the transportation entity 2 may be a processing circuit comprising a storage circuit configured to encode and store the data flows transmitted by the devices 11-18, for example by allocating resources and storage capacity to enable storage for the devices 11-18 and access or retrieval for the end-user device 3.

In such example, the devices 11-18 may be user equipment or any terminal transmitting a plurality of data flows for storage by the system.

In such example, the end-user device 3 may be a teleoperator device accessing an end-user interface of the storage system to consult, access and/or retrieve the content of the stored data.

Referring to figure 2, it is schematized the transportation process (e.g., for data streaming, for data storage) of data flows from the devices 11-18 of the multi-agent system to the end-user device 3 in prior art.

The transportation process by a system from a multi-agent system to an end-user device 3 is usually straightforward and parallelized between the devices 11-18. Each device 11-18 acquires, generates or creates a data flow, for example via calculations, estimations, measurements and/or observations, to be transported via the system, e.g., for storage or transmission. To that end, each device 11-18 is connected to or includes respective separate encoding units 111-181 configured to encode the corresponding acquired data flows. Each encoding unit 111-181 is then configured to separately and independently transmit the corresponding encoded data flow via a given system channel to the transporting entity 2 for transportation to the end-user device 3 side. Such end-user device 3 may typically include a receiving entity 300 (e.g., comprising antennas, or any other means for receiving the encoded data flows) and separate decoding units 311-381 configured to separately and independently decode the encoded data flows as received, resulting in decoded data flows.

It is noted that the system has a limited capacity for transporting the plurality of data flows. Such limited capacity may for example be quantified as a limited number of resources, a limited set of frequencies, a limited set of time slots, a limited set of channels, and/or a limited storage capacity available or allocated to transport the plurality of data flows. In the context of the present disclosure, such limited capacity is understood as the system having limited means for transporting the data flows for the multi-agent system in their required conditions, and does not introduce any particular limitation on an overall or global capacity of the system (e.g., for serving other applications, devices).

The plurality of data flows emitted by the devices 11-18 are respectively associated to sets of requirements. Such set of requirements may depend on the devices 11-18, the content of the data flows to be transmitted, the application or service served by the transportation of such data flows (e.g., linked to Quality of Service, QoS, of Quality of Experience, QoE), the end-user device 3 and/or the end-user controlling the end-user device 3.

For example, for a given data flow to be transported from a device 11-18 to the end-user device 3, the associated set of requirements may be related to a rendering quality of the data flow received at the end-user device side. Such rendering quality may for example be measured or quantified with predefined metrics such as:
- when the data flow includes images: P-SNR, MSE, mean opinion score;
- when the data flow includes videos: mean p-SNR, MSE, mean SSIM, VMAF;
- when the data flow includes point clouds: resolution metrics, number of points received by the end-user device 3, point fluency;
- when the data flow includes bitstreams: entropy value, number of received bits.

The set of requirements may also be related to an end-to-end latency tolerance, reflecting a maximum tolerated latency between the instant data flows are acquired or emitted by the respective devices 11-18 (e.g., when at least one device 11-18 corresponding to a drone begins to observe a portion of a geographical area acquires a data flow corresponding to a video flow) and the instant the end-user receives the corresponding data via the system.

The set of requirements may also be related to a similarity level between the plurality of data flows as transmitted by the devices 11-18 and the corresponding data flows as received by the end-user device 3.

The requirements associated to the plurality of data flows is notably reflected in constraints in both time slots and resource capacity to be allocated by the system for transporting the plurality of data flows, while aiming at respecting the set of requirements associated to each data flow.

A main issue in the transportation method and system of prior art as illustrated on figures 1 and 2 lies in the fact that the limited capacity of the system may prevent the fulfillment of all sets of requirements respectively associated to the plurality of data flows. Indeed, depending on the number of services and applications served by the system, on the timing and quantity of resource and channel occupancy and on the constraints imposed by the set of requirements notably, the requirements for transporting the data flows may not be met by the available limited capacity to be offered by the system. In such cases, the transportation method and system of prior art as shown on figures 1 and 2 may face issues such as failure to fulfill the set of requirements, degraded QoS and/or QoE, packet drops or rerouting leading to increased latency and degraded quality at the receiving end. Another issue also lies in system saturation, as the separate and independent transportation of the plurality of data flows may lead to bandwidth, resource, slot saturation and congestion issues in the system.

The present disclosure addresses such issues by proposing systems and methods for jointly transporting a plurality of data flows via a system having a limited capacity, as detailed in the following figures 3 to 7.

Referring to figures 3a and 3b, the present disclosure considers a system having a context similar to the one presented in figure 1, including devices 11-18 forming the multi-agent system, the transportation entity 2 and the end-user device 3.

In the context of the present disclosure, there is no limitation whatsoever on the nature of the data transportation system, the application served by the system (e.g., monitoring application, storage application), the devices 11-18, the transportation entity 2 and/or the end-user device 3. In particular, the system as considered may serve applications and devices, systems other than the multi-agent system and the transportation of the plurality of data flows. The description of the proposed systems and methods in the next figures will rely on examples of a system corresponding to a data transmission or streaming system (e.g., a communication network) as a purely illustrative yet non-limitative purpose.

Figure 3a illustrates a first possible embodiment of the proposed system, referred to as the centralized embodiment. The system of figure 3a further includes a central joint device 10 configured at least to gather the plurality of data flows from the devices 11-18 of the multi-agent system for jointly transporting such data flows via the transporting entity 2 to the end-user device 3 via a method which will be further described. The central joint device may be a user equipment, a terminal, a terrestrial or non-terrestrial device, comprising a processing circuit with a processing unit PROC, a memory unit MEM, a communication unit COM to communicate with at least the base station 2 and an interface unit INT to at least receive data flows from the devices 11-18. The central joint device 10 may also be a device similar to the devices 11-18 of the multi-agent system. The central joint device 10 may be an orchestration device for the multi-agent system devices 11-18. The conditions, criteria and means for transmitting the data flows from the devices 11-18 to the central joint device 10 as well as the processing of such data flows to jointly transport such data flows via the system will be further described in figures 4 to 7.

Figure 3b illustrates a second possible embodiment of the proposed system, referred to as the distributed embodiment. The system of figure 3b relies on one or several preconfigured devices 11, 16 of the multi-agent system, configured to further gather data flows from one or several other devices 12, 13, 14, 15, 17, 18 and to jointly transport such gathered data flows via the transporting entity 2 to the end-user device 3. The conditions, criteria and means for transmitting one or several data flows from some devices 12, 13, 14, 15, 17, 18 to some specific devices 11, 16 as well as the processing of such data flows to jointly transport such data flows via the system will be further described in figures 4 to 7.

The specific devices 11,16 may be understood as devices from the multi-agent system which are specifically preconfigured to further perform at least some steps of the proposed methods to take in charge the joint and transmission of some or parts of data flows apart from their own. Such specific devices 11,16 then play the role of the central joint device 10 at the scale of one or several other devices. In the rest of the disclosure, the term joint device will be used to generically refer to such specific devices 11,16 or to the central joint device 10. The devices of the multi-agent system which are not preconfigured to perform such joint and transmission steps may be referred to as the other devices.

In particular, both the centralized and the distributed embodiments may involve interactions between the devices 11-18, as illustrated on figures 3a, 3b via the bidirectional arrows linking some devices 11-18. Such interactions may be supported by proximity communication, such as direct (or device-to-device, D2D) communication means, e.g., New Radio Sidelink, or Bluetooth communication means for instance. The conditions, criteria and means for such device interactions in the context of joint transportation of data flows as proposed will be further described in figures 4 to 6.

It is now referred to figure 5a. Figure 5a is a flowchart showing steps of a method 500 for jointly transporting a plurality of data flows via a system as illustrated on figures 3a, 3b. The method 500 may be performed by at least a device configured to perform the proposed joint transportation of several data flows, such as the joint device 10 and/or the devices 11, 16 in either centralized or distributed embodiments. In some embodiments, which will be further detailed in figures 4b, 4c and 6, some steps of the method 500 may also be performed by other devices 11-18 of the multi-agent system.

Figures 4a, 4b and 4c schematize different possible embodiments of functional units of devices 10-18 configured for performing the proposed transportation method via steps of the method 500. Figures 4a, 4b, 4c notably illustrate one joint device corresponding to the central joint device 10 for performing at least some joint steps of the method 500. In particular, functional units and their interactions represented in bold type further highlight the proposed distinctive aspects and changes with respect to the prior art system of figure 2.

The proposed method 500 may be performed, at least for some steps, by at least one joint device, and may involve the following units:
on the emission side, located in the same or in different devices 10-18:
   - optionally, at least one feature extraction unit 100, 112, 122,...,182,
   - at least one mode selection unit 101, 113, 123,..., 183;
   - at least one an aggregation unit 102;
   - at least one a joint encoding unit 103,
and on the reception side, located in the end-user device 3:
   - a receiving unit 300;
   - a joint decoding unit 301;
   - a de-aggregation unit 302.

At a step S510, an initial situation of the system is considered. A plurality of data flows are available at the respective devices 11-18 and are aimed for transportation to an end-user device 3. Such data flows are notably associated to predefined respective sets of requirements as previously described, information related to each set of requirements being detained by the corresponding device 11-18.

For example, devices 11-18 may be unmanned aerial vehicles, e.g., drones, acquiring respective data flows corresponding to timestamped video flows of respective zones of a geographical area observed by the devices 11-18. Such video flows are to be transmitted to the end-user device 3 for an application of real-time or near-real-time remote monitoring of the geographical area for example.

The initial situation of the system also includes obtaining information related to the limited capacity of the system. Such information related to the limited capacity of the system is known by entities of the system, for example by the base station 2 or more generally the transportation entity. Such information related to the limited capacity may also be provided to the devices 10, 11-18, e.g., via broadcast by the transportation entity or another system entity (e.g., a network entity). Such information related to the limited capacity of the system could also be estimated by the devices 10, 11-18, e.g., for example based on resources allocated to each devices 10, 11-18 for data transportation and/or with proximity communications between devices 10, 11-18. Such proximity communications between devices 10-18 are for example illustrated on figures 4b and 4c by bidirectional arrows linking the devices 11-18.

At a step S520, the joint transportation process may be triggered by the transmission of data related to at least one data flow from at least one device to at least another device of the system.

In an embodiment, such transmission could be performed to a joint device 10,11,16 from other devices 12-15,17,18. This embodiment is for example illustrated by the configuration of figures 4a and 4b.

For example, notably in the centralized embodiment of figures 3a, 4a and 4b, step S520 may include gathering data related to the plurality of data flows from all devices 11-18 at the joint device 10 (or equivalently, gathering the plurality of data flows from all devices 11-18 at one device from the multi-agent system, e.g., device 11). In another example, notably in the distributed embodiment of figure 3b, step S520 may include one or several transmissions of data related to one or several data flows from one or several corresponding devices to one or several joint devices 10,11,16. In particular, such transmission may be "in cascade", so that some data related to data flows or parts of them are transmitted by their respective (source) devices 12,13,14,17 to intermediate devices 15,18, which then transmit those (potentially along with data related to their own data flows) to one or several joint device 10,11,16 for further performing the joint and transmission steps.

In another embodiment, such transmission could be performed from a joint device 10,11,16 to other devices 12-15,17,18, for example as a broadcast transmission. This embodiment is for example illustrated by the configuration of figure 4c.

For example, such transmission could enable to notify (e.g., via a control signal, a broadcast) the other devices 12-15,17,18 that a joint device 10,11,16 intends to perform a transmission of data flows to the transportation entity 2 of the system, and/or that the joint device 10,11,16 has available resources and/or capacity to perform joint and transmission steps by taking in charge other data flows. Such transmission could also enable to broadcast data related to the own data flow(s) of the joint device 11,16 to other devices 12-15,17,18, so that such other devices 12-15,17,18 could perform some steps of the proposed methods as it will be further described.

The data related to at least one data flow transmitted at step S520 could be the data flow itself. This is for example illustrated by the configuration of figure 4a, which represents a transmission of the plurality of data flows from all devices 11-18 to the central joint unit 100.

Optionally, as represented by optional step S530, the data related to at least one data flow could also correspond to extracted features of the data flow, resulting from a feature extraction step S530 for at least some data flows and performed by at least one feature extraction unit 100, 112, 122, 182.

Step S530 could thus include a feature extraction step on at least one data flow, for example using an existing feature extraction algorithm. In particular, the extracted features could have a size inferior to the size of the corresponding data flow it is extracted from. Optional step S530 could be performed by a joint device 10,11,16 on received data flows, for example if such data flows are previously transmitted by one or several other devices 12-15,17,18 to such joint device 10,11,16 at step S520. In such case notably, step S520 may precede optional step S530. This is for example illustrated by the configuration of figure 4a, in which the feature extraction unit 100 is located at the central joint device 100 and which is configured to perform feature extraction of the plurality of data flows received from the multi-agent system devices 11-18.

More generally, optional step S530 could also be performed by any device 10,11-18, for example to extract features on its own data flow before transmitting or broadcasting such extracted features to devices at step S520 as previously detailed. In such case notably, optional step S530 may precede step S520. This if for example illustrated by the configurations of figures 4b and 4c, in which there are several feature extraction units 112,122...,182 respectively located at the respective multi-agent system devices 11-18 and which are configured to perform feature extraction of their respective own data flows, either for transmitting such extracted features to the central joint device 10 for further processing (as illustrated on the configuration of figure 4b for example) or for directly further processing such extracted features (as illustrated on the configuration of figure 4c for example).

In an embodiment, such steps S520, S530 may be performed by devices 10,11-18 according to a preconfigured mode. For example, devices 11-18 may be preconfigured to transmit data related to their respective data flows to the central joint device 10. Optionally, such steps S520 and S530 may be the result of an assessment process S511 performed by one or several devices 10,11-18, potentially by relying on device-to-device communication, so as to determine whether the joint transportation method is to be performed, as illustrated on figure 5c. Referring to figure 5c, based on the initial situation of the system at step S510, some or all devices 10,11-18 may perform an assessment process S511 so as to assess for example:
- i) whether there is a need to perform joint transportation, and/or
- ii) which data transmission or processing is to be made on steps S520 and S530.

For example, assessment i) may take into account the information related to the limited capacity of the system as obtained at step S510 and the set of requirements of the data flows to be transmitted. Assessment i) may result in determining that the joint transportation method will be performed for example if the information related to the limited capacity obtained at step S510 is determined or estimated to be inferior to an estimated or predicted capacity required by the set of requirements to transport the data flows, or if the capacity of the system required for independently transporting the data flows as in prior art is above a predefined value. The capacity required to transport the data flows may for example be estimated or predicted based on the measurements, observations and/or processing performed by the devices 11-18.

For example, assessment ii) may take into account the relative accessibility of the devices 10,11-18 to each other and/or to the transportation entity 2. Such assessment ii) may for example rely on RSSI and/or SNR measurements to determine a level of connectivity or accessibility of each device. Typically, referring to figure 3b, device 12 may assess that its connectivity to the transportation entity 2 is too weak to transmit its data flow (e.g., device 12 is in a remote area) yet that its D2D connectivity with joint device 11 is satisfying, so that device 12 may transmit data related to its data flow to joint device 11 at step S520. In another example, referring to figure 3b, device 13 may assess that its connectivity to joint device 16 is only sufficient to transmit part of its data flow (e.g., the channel slot between devices 13 and 16 is limited) and decides to transmit the remaining part of its data flow to device 15. In other examples, assessment ii) as performed by a device may also take into account compared expected gains in aggregating its data flow with other(s), as it will further described below following step S540. In such context, assessment ii) may also enable a device to choose to transmit data related to its data flow to a given device over another despite having approximately similar connectivity conditions with both devices, for example when the aggregation gain is better when aggregating its data flow with the data flow of the given device, than aggregating its data flow with the data flow of the other device.

If such assessment step S511 results in determining that there is no technical incentive in performing the joint transportation process (e.g., assessment i) estimates that the limited capacity of the system has enough availability for serving the separate transportation of the plurality of data flows), then a classic transportation as illustrated on figures 1 and 2 may be selected at step S543. Otherwise, step 520 is performed in view of a joint transportation as further detailed.

Thus, steps S520 and S530 may be triggered by an active (i.e., device assessment) or passive (i.e., preconfigured device) behavior of the devices 10,11-18. In an embodiment, the configuration of a device 11-18 of the multi-agent system to act as a joint device or not could also be assessed at step S511, for example depending on a connectivity level of such device to the transportation entity 2. In such embodiment, all devices 10-18 could be configured with means to perform the joint transportation method 500.

At a step S540, based on the data related to at least one data flow as transmitted at step S520, at least one device 10,11-18 performs a selection of at least one aggregation mode to aggregate at least parts of the data flows with each other.

The aggregation mode selection step S540 may be performed by one or several mode selection units 101,113,123...,183.

The selected aggregation mode(s) is (are) selected among a plurality of predefined aggregation modes. Such plurality of predefined aggregation modes may for example depend on the nature of the data flows (e.g., videos, images, point clouds, bitstreams...) and/or on the type of encoding to be performed for transporting such data flows (e.g., JPEG encoding, a H264/5/6 encoding, a point-cloud octree encoding, a source coding, preferably a Huffman coding or a CABAC...). Such plurality of predefined aggregation modes are known by at least some devices 10,11-18 (e.g., via device pre-configuration).

The selection of at least one aggregation mode at step S540 implies the selection of parts of full data flows to be aggregated with parts of or full other data flows. Such aggregation mode selection may be performed by device(s) 10,11-18 based on the data related to the data flows as received at step S520. In particular, such aggregation mode selection S540 may be performed based on extracted features of the data flows resulting from step S530.

In an embodiment, the selection of at least one aggregation mode may be only performed by one or several joint devices 10,11,16. This is for example illustrated by the configurations of figures 4a and 4b. For example, when step S520 corresponds to transmitting data related to data flows to the central joint device 10 or to joint devices 11,16, such joint device(s) 10,11,16 may then perform step S540 on the received data (and possibly on their own data for joint devices 11,16) to determine at least one aggregation mode to aggregate such data. This is for example the case in both configurations of figures 4a and 4b, in which step S540 is performed by one mode selection unit 101, either on features extracted from received data flows (in figure 4a) or on received (already) extracted features (in figure 4b).

In another embodiment, the selection of at least one aggregation mode may be performed by each of the other devices 12-15,17,18. For example, when step S520 corresponds to a broadcast of data related to its data flow by a joint device 11,16 - e.g., extracted features of such data flow are broadcasted to the other devices 12-15,17,18 -, each device 12-15,17,18 possesses data related to the data flow of the joint device 11,16. Each device 12-15,17,18 may then perform step S540 on such received data related to the data flow of the joint device 11,16 along with its own data flow to determine at least one aggregation mode to aggregate such data flows. This if for example illustrated by the configuration of figure 4c, in which step S540 is performed by a plurality of mode selection units 113,123,...,183, each mode selection unit 113,123,...,183 receiving broadcasted data from a joint device 10 and performing mode selection locally.

Step S540 implies, for the device implementing the step, to process data related to at least two different data flows as detained by the device (e.g., its own data flow and/or data flow of other devices), so as to identify portions of data flows to be aggregated with each other using a specifically identified aggregation mode. A consequence of such step is that several aggregation modes may be selected to be applied to different parts of a same data flow. Step S540 leads to a chosen mix-up of different parts of the plurality of data flows, so as to result in aggregated data flows at step S550.

As detailed, it is noted that for a given device performing step S540, the selection of aggregation mode(s) has a starting point of data flows (or data related to data flows) as gathered by such device. Such gathered data flows may correspond to the plurality of data flows from all devices (e.g., when data flows are all sent to the central joint device 10 in the centralized embodiment), so that the selection step S540 is performed in appreciation of all data flows to be transmitted (or data related to those). Such gathered data flows may also correspond to only some of the plurality of data flows (e.g., when step S540 is performed "locally" by each device 11-18), so that the selection step S540 is performed in appreciation of a reduced set of dataflows or on partial data flows (or data related to those).

The selection step S540 further leads to a reorganization of such gathered data flows dictated by the aggregation mode(s) as selected, by identifying parts of such detained data flows to be processed altogether.

During step S540, the selection of aggregation mode(s) to reorganize the data flows is performed in view of maximizing the payload gain during the encoding stage while fulfilling the requirements associated to the data flow transportation. Indeed, the overall goal of the proposed method is to determine and encode aggregated data flows for transportation to exhibit an overall smaller payload with respect to separately encoding and transporting data flows as performed in figures 1 and 2 of prior art, while still meeting requirements on the end-user side in terms of rendered quality and/or tolerated latency typically.

To that end, step S540 of selection of aggregation mode(s) relies on identifying how to organize the gathered data flows, associated to their respective sets of requirements, to optimize and exploit their potentially contained redundancy.

In practice, such aggregation mode corresponds to determining a specific processing to be performed on specific parts of the gathered data flows, such as:
-- interleaving and/or reordering elements composing the specific parts of data flows, and/or
-- grouping and/or assembling elements composing the specific parts of data flows, and/or
-- pruning elements composing the specific parts of data flows.

For example, depending on the nature of the data flows, aggregating elements of such data flows could correspond to forming specifically-sized Group of Pictures (when data flows are videos), rearranging pixels or frames (when data flows are images), reordering voxels (when data flows are point clouds).

To that end, step S540 may include estimating and evaluating one or several similarity metrics based on the data related to the gathered data flows, for example based on the extracted features associated to such gathered data flows, so as to identify similarities between parts of the gathered data flows.

The selection of aggregation mode(s) may rely on the obtention at step S5400 of a neural network model trained to identify parts of data flows to be aggregated. The training of such neural network model will be detailed further in the present disclosure. Such trained neural network model may be integrated into the mode-selection units 101, 113, 123..., 183. The selection of aggregation mode(s) may also rely on a library of kernel-based functions.

The trained neural network model aims at determining, from an input of gathered data flows, an aggregation or several aggregation of such gathered data flows to optimize a cost function, such cost function notably depending on the gathered data flows, their sets of requirements, the encoding functions to be used, the predefined aggregation modes.

The training of the neural network model for selecting aggregation mode(s) may include:
- obtaining a training set of data flows associated to a training set of requirements,
- obtaining predefined sets of encoding options associated to predefined encoding functions,
- extracting features associated to candidate data flows among the training set of data flows,
- based on the extracted features, selecting at least one candidate aggregation mode among the plurality of predefined aggregation modes,
- applying said at least one candidate aggregation mode to the training set of data flows to determine a candidate aggregated data flow,
- depending on the candidate data flows, selecting a candidate encoding function and a candidate set of encoding options,
- encoding the candidate aggregated data flow using the selected candidate encoding function and the selected candidate set of encoding options,
- based on a comparison between the candidate data flows and the candidate aggregated data flow, determining a value of a cost function associated to a candidate configuration formed by the following parameters: the candidate data flows, the extracted features, the candidate aggregation mode, the selected candidate encoding function and the selected candidate set of encoding options,
- optimizing the cost function by varying the candidate configuration.

Thus, the training of the model used for selecting aggregation mode(s) may rely on testing a plurality of combinations of data flow features, aggregation modes, encoding functions, encoding options to assess the encoding payload gain of the resulting aggregation data flow.

In particular, varying the candidate configuration, which enables to test another combination, may be performed in exhaustive manner (i.e., scanning all possible candidate configurations) or not, for example via a Monte-Carlo-like method to scan only some candidate configurations, which are selected in a random manner (e.g., via a configuration exploration) or with respect to predefined criteria, e.g., a computation complexity criterium.

The considered encoding functions and options may depend on the nature of the data flows to be processed. For example, the training set of data flows may be images, videos, bitstreams, point clouds. The encoding functions to be considered for training the model may be the JPEG encoding function, the H264/5/6 encoding function, a point-cloud octree encoding function, a source coding function, preferably a Huffman coding or a CABAC. The encoding options to be considered could be, as examples:
- for the JPEG encoding function: quality factor, resolution;
- for the H264/5/6 encoding function: video bitrate, video framerate, size of a Group of Picture, GoP;
- for the point-cloud octree encoding function: voxel size, octree depth;
- for the source coding function: compression factor, computation complexity.

The extraction of features associated to the candidate data flows could correspond to feature extraction performed similarly to step S530 to obtain representative features of each candidate data flows, but could also correspond to any other relevant feature extraction performed specifically in the context of layer processing, depending on the neural network model.

The model may be further trained to integrate a system constraint such as a training limited capacity, for example as a constraint on the cost function to be optimized. Such training limited capacity is preferably chosen to reflect an actual capacity of the system to be used for the joint transportation method, but could also be chosen as any theoretical, empirical or estimated capacity value for training purposes.

By optimizing the cost function, it may be understood finding the candidate configurations which enable to:
- maximizing a payload size gap between the candidate data flows and the candidate aggregated data flow, thus maximizing the payload gain when encoding aggregated data flows, and
- fulfilling the requirements associated to the candidate data flows.

In other embodiments, the cost function could also be optimized by considering other conditions and constraints, for example so as to optimize the resource usage of the system, to exploit potential relaxations in the set of requirements and balance between requirements and system optimization.

Once trained, the neural network model obtained at step S5400 may be used to determine, based on the gathered data flows, one or several configurations to aggregate such gathered data flows.

As aforementioned, the result of the selected aggregation mode(s) may take the form of type(s) of aggregation of data flows, which depends on the nature of the gathered data flows, and a fortiori on the encoding which will be performed on such data flows.

For example, in the case of data flows corresponding to video flows, encoded by a H264/5/6 encoder typically, a selected aggregation mode may correspond to rearranging frames of the video flows to exploit redundancy of frames across different Group of Pictures, which is equivalent to adapting the size of the considered Group of Pictures, to enhance inter-prediction.

Examples of selected aggregation modes are illustrated on figures 7a and 7b in the case of two gathered video flows. In figure 7a, the represented aggregation mode represents a regular frame-wise interleaving of frames of the video flows corresponding to a regular rearrangement to alternate frames from video flows 1 and 2, resulting in an aggregated video flow where any frame from video flow 1 comes next to frames from video flow 2, thus taking advantage of potential frame redundancies between video flows 1 and 2. In figure 7b, the represented aggregation mode represents an irregular frame-wise interleaving of frames of the video flows. The irregular rearrangement of frames from both video flows 1 and 2 could be deterministic or not, in order to optimize frame redundancy exploitation between the video flows 1 and 2 in the resulting aggregated video flow.

In another example, in the case of data flows corresponding to image flows, a selected aggregation mode may identify some specific images to be encoded by a JPEG encoder, such specific images becoming reference images for all the other images that are not encoded. Another selected aggregation mode may perform image pruning by puncturing some images of the image flows when they are redundant in a local succession of images of the flow. The selected aggregation mode then leads to a lower output payload of the JPEG encoder, with respect to "naively" encoding the image flows.

In another example, in the case of data flows corresponding to point clouds distributed in a spatial or geometrical area, a selected aggregation mode may identify a specific clustering of points by creating heterogeneous voxels or geometrical forms (e.g., cubes) spatially representing the point cloud, so as to reorganize and reduce the size of the point cloud to be encoded.

In another example, in the case of data flows corresponding to bitstreams, a selected aggregation mode may identify a specific reordering or interleaving of bits of the bitstream, so as to take benefit of the correlation between bits of the bitstream.

Step S540 thus results in one or several selected aggregation modes to process the gathered data flows, as determined by the devices 10,11-18 which performed such step S540.

At step S5401, data related to the one or several selected aggregation mode(s) is also transmitted to the end-user device 3. This is illustrated in the configurations of figures 4a, 4b and 4c, by an arrow linking the mode selection unit 100 (in figures 4a, 4b) or the aggregation unit 102 (in figure 4c) and the de-aggregation unit 302.

Optionally, step S540 is followed by a transmission of data related to the selected aggregation mode(s) to a joint device 10,11,18, notably when step S540 is performed by other devices 12-15,17,18. In such case, such transmission of the data related to the selected aggregation mode(s) to a joint device 10,11,18 also includes transmitting data related to the corresponding data flows of the other devices 12-15,17,18, for example extracted features of such data flows. Especially, data related to parts of the data flows concerned by the selected aggregation mode(s) are transmitted to the joint device 10,11,18. This is for example illustrated by the configuration of figure 4c, in which the plurality of mode selection units 113,123,...,183 are respectively configured to transmit data related to their respective selected aggregation mode(s), along with data related to their respective data flows (e.g., their extracted features outputted from units 112,122,...,182) to the joint device 10 for further processing.

The data related to the selected aggregation mode(s) could correspond to identifiers (e.g., labels) associated to the selected aggregation mode(s) in a list containing the predefined aggregation modes as known by both the emitting (i.e., the multi-agent system) and receiving (i.e., the end-user device 3) sides. In particular, the data related to the selected aggregation mode(s) also identifies which parts of which data flows are aggregated according to which selected aggregation mode.

Optionally, as illustrated on figure 5b, step S540 may be completed by an assessment on the gain of aggregating the gathered data flows with the aggregation mode(s) selected at step S540. Such assessment may include a step S541 of determining a cost of (e.g., an estimated quantity of resources, slots, system capacity used for transportation of) aggregated data flows using step S540 and a step S542 of comparing such cost to an estimated cost for separately transporting the gathered data flows as performed in prior art. The joint transportation method may be further pursued with step S550 if step S542 results in a gained cost in performing the data aggregation. Otherwise, the classic transportation as illustrated on figures 1 and 2 may be selected at step S543. Furthermore, results of such assessment on the aggregation gain could be used alternatively or cumulatively to the assessment step S511 of figure 5b as previously detailed, for example, to choose, for a given device, to transmit data related to its data flow to a device over another, despite having approximately similar connectivity conditions with both devices.

At an aggregation step S550, the one or several aggregation modes as selected at step S540 is or are applied to the data flows, resulting in one or several aggregated data flows.

Such step S550 is performed by one or several joint devices 10,11,18. Figures 4a, 4b and 4c for example all illustrate an aggregation unit 102 located at a central joint device 10. For example, in the centralized embodiment of figure 3a, only the central joint device 10 performs the aggregation step S550 for all data flows while, in the distributed embodiment of figure 3b, joint devices 11 and 16 perform the aggregation step S550 (joint device 11 performs aggregation for at least parts of data flows of devices 11 and 12, while joint device 16 performs aggregation for at least parts of data flows of 13-15,17 and 18). The aggregation step S550 is based on:
- the selected aggregation mode(s) obtained at previous step S540, and
- data related to the parts of data flows concerned by such selected aggregation mode(s).

In particular, the selected aggregation mode(s) could either be obtained by the joint devices 10,11,18 themselves (e.g., in figures 4a and 4b), or by reception of data related to such selected aggregation mode(s) from the other devices 12-15,17,18 as aforementioned (e.g., in figure 4c). Similarly, the data related to the parts of data flows to be aggregated using the selected aggregation mode(s) may already be detained by the joint devices 10,11,16 (for example, as received at step S520, e.g., figures 4a and 4b) or may be received from the other devices 12-15,17,18 (e.g., along with the aggregation mode(s) to be applied) after step S540 was performed by such other devices 12-15,17,18 (e.g., figure 4c).

Step S550 corresponds to applying each selected aggregation mode to the parts of data flows concerned by such aggregation mode, as determined at step S540. Step S550 may result in one aggregated data flow or a plurality of aggregated data flows.

Optionally, the selected aggregated mode(s) could also be transmitted to the end-user device 3 at step S550 by the aggregation unit 102, as for example illustrated by figure 4c.

At a step S560, a joint encoding step is performed to encode the one or several aggregated data flows as determined at previous step S550.

Such joint encoding step may be performed by one or several joint encoding units 103 located in one or several joint devices 10,11,18, following step S550.

The joint encoding step corresponds to encoding the one or several aggregated data flows using an encoding function such as a JPEG encoder, a H264/5/6 encoder, a point-cloud octree encoder, a source coding, preferably a Huffman coding or a CABAC coding. In particular, the encoding function used at step S560 is a non-linear encoding function, so that the resulting encoded aggregated data flow(s) exhibit(s) a smaller payload size than a sum of the payload sizes of the plurality of data flows after encoding using the encoding function. Such payload gain is notably known and conditioning for selecting the aggregation mode(s) at step S540.

At a step S570, the one or several encoded aggregated data flows are transported via the transportation entity 2 for further reception by the end-user device 3.

In an embodiment, such transportation step S570 may be a transmission step, for example via a base station 2 to a receiving entity 300. In another embodiment, such transportation step S570 may be storage step performed on a storing disk.

The transportation step S570 is performed by one or several joint devices 10,11,18. Such transportation step S570 may consume resources, e.g., radio resources, time slots, channel slots, storage capacity allocated by the system for transporting data flows emitted by the multi-agent system. The joint devices 10,11,18 thus use such resources to transport such data flows in one or several aggregated data flows. In particular, the resources used (and thus the portion of limited capacity occupied) by the aggregated data flow(s) are strictly inferior to the resources which would be consumed by transporting a plurality of encoded data flows as shown on figures 1 and 2.

On the receiving end (i.e., on the end-user device 3 side), the encoded aggregated data flows are received, decoded and de-aggregated at respective steps S581, S582 and S583, by respectively a receiving unit 300, a joint decoding unit 301 and a de-aggregation unit 302 located at the end-user device 3, as illustrated on figures 4a, 4b and 4c.

At step S581, the one or several encoded aggregated data flow(s) are received by the reception unit 300 of the end-user device 3. In particular, such received encoded aggregated data flow(s) may differ from the transported encoded aggregated data flow(s) of step S570, due to transportation parameters, noise and/or loss for example.

At a step S582, the received encoded aggregated data flow(s) is/are decoded by a joint decoding unit 301 of the end-user device 3. Such joint decoding step S582 is performed using a decoding function configured to decode data as encoded by the encoding function. Step S582 results in one or several decoded aggregated data flow(s).

At a step S583, the one or several decoded aggregated data flow(s) are de-aggregated by a de-aggregation unit 302 of the end-user device 3. Such step S583 corresponds to a reorganization of elements composing each part of each data flow which were aggregated at step S540, resulting in several data flows of portions of data flows. To that end, the de-aggregation unit 302 relies on the data related to the aggregation mode transmitted at step S5401.

For example, in the case of aggregated video frames as shown on figures 7a and 7b, the de-aggregation step S583 enables to reorganize the aggregated frames, based on knowledge on the used aggregation mode as provided by step S5401, so as to retrieve the distinct and separate data (video) flows 1 and 2.

It is now referred to figure 6, which illustrates an embodiment of the method 500 in an exemplary configuration distinct from figures 3a, 3b involving a joint device 11 configured to emit a first data flow, and two devices 12, 13 of the multi-agent system configured to emit respective second and third data flows. In the present example, the only joint device is the joint device 11, configured to perform at least the aggregation S550, the joint encoding S560 and the transportation S570 steps.

Figure 6 illustrates the comparative cases of a joint device 11 interacting with:
- device 12, which is illustrated as "active", in that such device 12 may perform some steps of the method 500 on its own second data flow, such as the feature extraction step S530 and the aggregation mode selection step S540;
- device 13, which is illustrated as "passive", in that such device 13 directly transmits its third data flow to the joint device 12 for a centralized performance of the joint transportation method 500.

Step S510 of considering the initial situation of the system may be performed by each of the devices 11, 12, 13, for example by obtaining information related to the limited capacity of the system and/or to the first and second sets of requirements associated to the first and second data flows.

Steps S520, S530 and S540 may be performed differently depending on devices 12 and 13.

In either case, step S530 of feature extraction may be performed at least on the joint device 11 side (noted S530₁₁) so as to extract features from its own first data flow.

In the case of the active device 12, the feature extraction S530 step may be performed by the device 12 (noted S530₁₂) on its own second data flow. Device 12 may receive data related to the first data flow (e.g., the extracted features of the first data flow resulting from step S530₁₁) from the joint device 11 (e.g., via broadcast) at step S520 (noted S520₁₂) and select at least one aggregation mode(s) at step S540 (noted S540_{11,12}) to aggregate at least parts of the first and second data flows. Once step S540_{11,12} is performed by device 12, data related the selected aggregation mode(s) are transmitted to the joint device 11 (noted S540a) for further performing the method.

In the case of the passive device 13, step S520 includes directly transmitting the third data flow from the device 13 to the joint device 11 (noted S520₁₃). The joint device 11 may then perform the feature extraction step S530 for the received third data flow (noted S530₁₃) and, based on the extracted features of both the first and third data flows, the joint device 11 may select at least one aggregation mode at step S540 to aggregate at least parts of the first and third data flows (noted S540_{11,13}).

Step S540 may also include, for the joint device 11, to further perform step S540 to potentially further select aggregation mode(s) to aggregate the first, second and third data flows, notably by taking into account the aggregation mode(s) already selected by the device 12 to aggregate parts of the first and second data flows.

Data related to the selected aggregation mode(s) to aggregate the different data flows may be transmitted to the end-user device 3 at step S5401, by the joint device 11 and/or possibly by device 12 (for the aggregation mode(s) selected by device 12 for aggregation the first and second data flows).

The joint device 11 then proceeds to steps S550, S560 and S570 to respectively aggregate, encode and transport the resulting encoded aggregated data flow(s) to the end-user device 3. Such encoded aggregated data flow(s) may notably be transported by the system within the means of its limited capacity.

The end-user 3 may then proceed to steps S581, S582, S583 to respectively receive, decode and de-aggregate the encoded aggregated data flow(s), so as to retrieve the original first, second, third data flows in the conditions set by the sets of requirements (e.g., in rendered quality, in timing etc.).

### Reference Signs List

- 11, 12, 13, 14, 15, 16, 17, 18: devices
- 111, 121,...181 : separate encoding unit
- 100, 112, 122,...,182: feature-extraction unit
- 101, 113, 123..., 183 : mode-selection units
- 10: central joint device
- 102: aggregation unit
- 103: joint encoding unit
- 2: base station
- 3: end-user device
- 300: receiving unit
- 311, 321,...,381: separate decoding units
- 301: joint decoding unit
- 302: de-aggregation unit

## Claims

1. Method (500) for jointly transporting a plurality of data flows via a system having a limited capacity, the plurality of data flows being respectively associated to sets of requirements,
the method (500) comprising the following steps:
- (S510) obtaining information related to the limited capacity and to the sets of requirements,
- based on data related to said plurality of data flows, on the information related to the limited capacity and the sets of requirements, (S540) selecting at least one aggregation mode for aggregating at least a part of the plurality of data flows, among a plurality of predefined aggregation modes,
- (S550) applying said selected aggregation mode to said part of the plurality of data flows to determine an aggregated data flow,
- (S560) encoding the aggregated data flow using an encoding function,
- (S570) transporting the encoded aggregated data flow via the system (2).

2. Method (500) according to claim 1, wherein the encoded aggregated data flow has a payload size lower than a sum of payload sizes of the plurality of data flows after encoding using the encoding function.

3. Method (500) according to any one of the precedent claims, wherein the limited capacity is at least one among:
- a limited number of resources,
- a limited set of frequencies,
- a limited set of time slots,
- a limited set of channels, and
- a limited storage capacity.

4. Method (500) according to any one of the precedent claims, wherein applying (S550) the selected aggregation mode to the plurality of data flows includes:
- calculating a similarity parameter associated to the part of plurality of data flows,
- based on said similarity parameter, performing at least one among:
-- interleaving elements composing the plurality of data flows,
-- grouping elements composing the plurality of data flows, and
-- pruning elements composing the plurality of data flows.

5. Method (500) according to any one of the precedent claims further comprising, before the selection (S540) step:
- (S530) performing a feature extraction operation for at least some of the plurality of data flows, a size of the extracted features for each data flow being strictly inferior to a size of the corresponding data flow,
and wherein the selection (S540) of the at least one aggregation mode is based on a similarity parameter calculated based on said extracted features.

6. Method (500) according to any one of the precedent claims, wherein the selection (S540) of the at least one aggregation mode is performed using a trained neural network unit.

7. Method (500) according to any one of the precedent claims, wherein the selection (S540) of the at least one aggregation mode further includes a selection training step (S5400), said selection training step (S5400) further comprising the following steps:
- obtaining a training set of data flows associated to a training set of requirements,
- obtaining predefined sets of encoding options associated to predefined encoding functions,
- extracting features associated to candidate data flows among the training set of data flows,
- based on the extracted features, selecting at least one candidate aggregation mode among the plurality of predefined aggregation modes,
- applying said at least one candidate aggregation mode to the training set of data flows to determine a candidate aggregated data flow,
- depending on the candidate data flows, selecting a candidate encoding function and a candidate set of encoding options,
- encoding the candidate aggregated data flow using the selected candidate encoding function and the selected candidate set of encoding options,
- based on a comparison between the candidate data flows and the candidate aggregated data flow, determining a value of a cost function associated to a candidate configuration formed by the following parameters: the candidate data flows, the extracted features, the candidate aggregation mode, the selected candidate encoding function and the selected candidate set of encoding options,
- optimizing the cost function by varying the candidate configuration.

8. Method (500) according to the precedent claim, the selection training step (S5400) further including obtaining a training limited capacity, and wherein the cost function is optimized by:
- maximizing a payload size gap between the candidate data flows and the candidate aggregated data flow, and
- fulfilling the requirements associated to the candidate data flows.

9. Method (500) according to any one of the precedent claims, wherein the selection (S540) of the at least one aggregation mode is triggered (S511) by at least one element among:
- a result of a comparison between the information related to the limited capacity and data related to a payload size of the plurality of data flows,
- data related to an availability of at least one source device associated with a data flow.

10. Method (500) according to any one of the precedent claims, the transported encoded joint data flow being received (581), decoded (582) and de-aggregated (583) by an end-user device (3) based on the at least one selected aggregation mode, resulting in a plurality of decoded data flows, and wherein the set of requirements is related to at least one among :
- a rendering quality of each decoded data flow,
- a latency tolerance for receiving the transported encoded joint data flow,
- a similarity level between the plurality of data flows and the plurality of decoded data flows.

11. Data transmission method for jointly transporting a plurality of data flows from a plurality of respective source devices to an end-user device (3) via a communication network system (2) having a limited capacity, the plurality of data flows being respectively associated to sets of requirements, said communication method being performed according to any one of the preceding claims.

12. Data storage method for jointly transporting a plurality of data flows from a plurality of respective source devices to an end-user device (3) via a data storage system (2) having a limited capacity, said storage method being performed according to any one of claims 1 to 10.

13. Device for determining at least one encoded aggregated data flow based on a plurality of data flows emitted by a plurality of respective source devices (11-18) for transportation of said encoded aggregated data flow via a system (2), the joint device comprising at least one processing unit (PROC) for performing the method according to any one of the preceding claims.

14. Computer software comprising instructions to implement at least a part of a method according to one of claims 1 to 13 when the software is executed by a processing unit.

15. Computer-readable non-transient recording medium on which a software is registered to implement a method according to one of claims 1 to 13 when the software is executed by a processing unit.
